# EUROPEAN PATENT SPECIFICATION

(11) **EP 2 721 322 B1**
(45) Date of publication and mention of the grant of the patent: **27.05.2015**
(21) Application number: 12725038.9
(22) Date of filing: 01.06.2012
(51) Int. Cl.: F16H 47/04, F16H 61/04

(54) **CONTINUOUSLY VARIABLE POWER-SPLIT VEHICLE TRANSMISSION**
STUFENLOSES LEISTUNGSVERZWEIGTES FAHRZEUGGETRIEBE
TRANSMISSION DE VÉHICULE À RÉPARTITION DU COUPLE À VARIATION CONTINUE

(30) Priority: 14.06.2011 GB 201109970
(43) Date of publication of application: 23.04.2014
(73) Proprietor: Valtra Oy Ab, 44201 Suolahti (FI)
(72) Inventor: RINTOO, Mikko, FIN-40270 Palokka (FI)
(74) Representative: AGCO Intellectual Property Department
(86) International application number: PCT/EP2012/060389
(87) International publication number: WO 2012/171815

(56) References cited:
- DE-C1- 4 236 671
- US-A1- 2006 276 291

## Description

The invention relates to continuously variable power-split transmissions of the direct shift (DSG) type which include at least two alternatively engageable clutches within respective torque transfer paths.

Direct shift (or dual clutch) transmissions are well known in the automotive industry. European Patent application EP-1,541,898 discloses a continuously variable power-split DSG transmissions for an agricultural tractor. DE 42 36 671 C1 discloses a transmission according to the preamble of claim 1.

It is an object of the invention to provide a continuously variable DSG power-split transmissions having improved performance during up-shifting.

In accordance with the invention there is provided a continuously variable power-split transmission for transferring torque from a primary motor to a differential gear, the transmission comprising an epicyclic module, a continuously variable drive connection and a direct shift transmission module, the epicyclic module comprising a first input drivingly coupled to the primary motor, a second input and first and second outputs, the continuously variable drive connection being drivingly coupled between the primary motor and second input of the epicyclic module, the first and second outputs being alternatively coupled to the differential gear via respective torque transfer paths provided by the direct shift transmission module, each path including a clutch and a synchromesh unit which allows selection of one of a plurality of torque transfer sub-paths, each clutch comprising an input side and an output side, the transmission further comprising a controller to control switching between the torque transfer paths in which one of said clutches is opened and the other said clutch is closed, wherein the transmission is operable in a first stage change mode in which said switching occurs only when the speed ratio of the input side to the output side of the clutch being closed is within a predetermined range, and a second stage change mode in which the speed ratio of the input side to the output side of the clutch being closed is outside of said predetermined range when said clutch is closed.

By up-shifting whilst there is speed disparity in the input side and output side of the incoming clutch, improved acceleration (albeit less smooth) can be achieved. The invention recognises that rapid increase in the transmission ratio is inhibited by the tendency to adjust the ratio of the continuously variable drive connection to its limit each time a shift in transmission stage is required. By early shifting from one torque transfer path to another (by closing/opening of clutches) more rapid increase in transmission ratio is achieved. At constant (or increasing) engine speed, this translates into more rapid acceleration.

Preferably the transmission further comprises load sensing means which determines the load placed upon the differential, wherein the transmission operates in the first stage change mode when said determined load is above a predetermined threshold, and wherein the transmission operates in the second stage change mode when said determined load is below a predetermined threshold. Advantageously, this avoids the placing of undue stress upon the clutch and associated shafts. By monitoring the load placed upon the transmission, the short shifting is only enabled when stresses are low.

The continuously variable drive connection may be hydrostatic and include a hydraulic pump and a hydraulic motor. In this case the load sensing means may comprise a pressure sensor that measures the hydraulic pressure in the hydraulic pump.

In the second stage change mode, the input-to-output ratio of the continuously variable drive connection is preferably limited within a predetermined range. For example, if the input-to-output ratio is determined by the angle of a swashplate in a variable displacement hydraulic pump, then it is this angle that is limited within a predetermined range.

In a preferred embodiment the transmission comprises first, second and third torque transfer paths between the primary motor and the differential gear, the first torque transfer path including the continuously variable drive connection and bypassing the epicyclic unit, the second and third torque transfer paths each including one of the first and second epicyclic outputs, each of the torque transfer paths including a respective in-line clutch for closing the respective path, the first and second torque transfer paths sharing an input of one of said synchromesh units. In this arrangement the transmission is preferably operable in a mechanically discontinuous mode in which torque is transferred via the first torque transfer path, and first and second mechanical modes in which torque is transferred via the second and third torque transfer paths respectively, the transmission further comprising a forward-reverse transmission module coupled between the primary motor and the first epicyclic input and serving to selectively reverse the torque direction conveyed to the first epicyclic input, wherein the forward-reverse transmission module conveys torque from the primary motor to an input of the continuously variable drive connection with a constant direction.

Further advantages of the invention will become apparent from reading the following description of specific embodiments with the reference to the appended drawings in which:
Figure 1 shows diagrammatically the layout of a vehicle transmission in accordance with an embodiment of the invention;
Figure 2 shows a plot of pump angles v. drive speed (at a constant engine speed) for the various transmission stages available; and,
Figure 3 shows a tabular summary of the torque transfer paths for each transmission stage.

The present invention is susceptible of embodiments of many different forms. While the drawings illustrate, and the specification describes, certain preferred embodiments of the invention, it is to be understood that such disclosure is by way of example only. There is no intent to limit the principles of the present invention to the particular disclosed embodiments.

### Construction

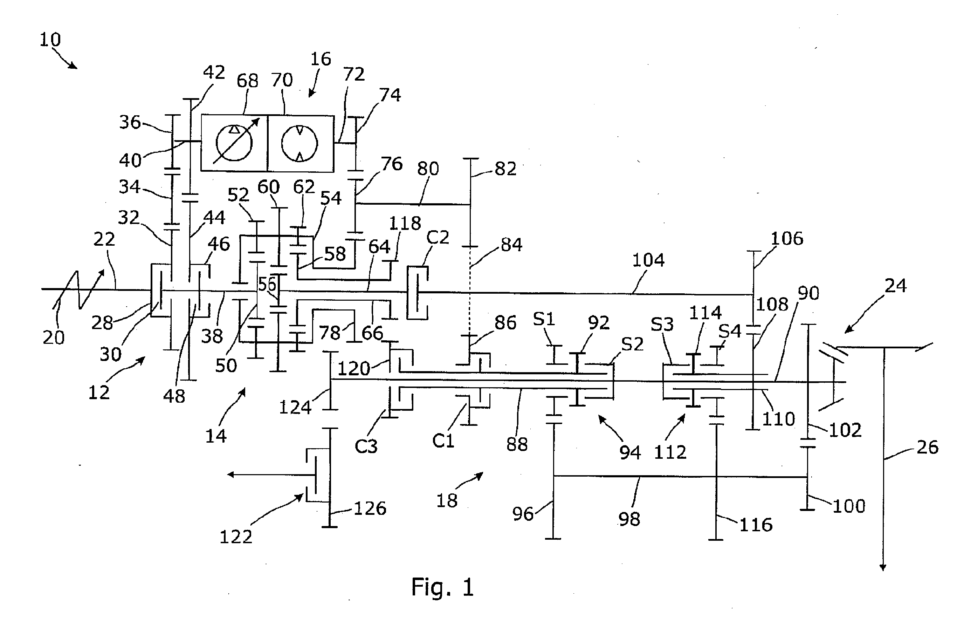

With reference to Figure 1, an agricultural tractor transmission 10 is shown diagrammatically. The transmission 10 includes a forward-reverse transmission module 12, and epicyclic module 14, a hydrostatic drive branch 16 and a direct shift transmission (DSG) module 18. The inter-relationship between these components will be described in the following passages. At its input end, transmission 10 is coupled to an internal combustion engine 20 which generates torque via a driveshaft 22 which is transferred via transmission 10 to a differential gearing 24. The invention is not limited to vehicles with internal combustion engines and other sources of torque such as electric motors may instead be employed. The differential gear 24 serves to distribute the transmitted torque to a rear axle of the agricultural tractor represented at 26.

Driveshaft 22 is integral with an input shaft of the forward-reverse transmission module 12 and is also integral with an input side 28 of forward clutch 30 and first gear 32 in a first gear set 32, 34, 36 to be described in more detail below. Forward clutch 30 is closed to render driveshaft 22 integral with shaft 38 which forms a first epicyclic input.

Third gear 36 of the first gear set 32, 34, 36 is keyed to a shaft 40 which provides an input side to hydrostatic power branch 16 to be described below. A further gear 42 is keyed to shaft 40 and provides a first gear in a second gear set 42, 44. Gear 44 idles on shaft 38 and is integral with an input side 46 of reverse clutch 48. Closure of reverse clutch 48 completes a mechanical drive connection between driveshaft 22 and epicyclic first input 38 via the first gear train 32, 34, 36 and second gear train 42, 44.

Turning to the epicyclic module 14, first sun gear 50 is keyed to shaft 38 and drives a first set of planetary gears 52 supported by planet carrier 54. Second and third sun gears 56, 58 are each driven by respective planetary gear sets 60, 62 which are coupled to the same planet carrier 54. Second and third sun gears 56, 58 are integral with first and second epicyclic output shafts 64, 66 which are mutually coaxial.

The epicyclic module 14 in this example does not include a ring gear. However, it is envisaged that alternative epicyclic arrangements known in the art may be used instead without deviating from the invention.

Turning to the hydrostatic power branch 16, a variable displacement pump 68 is connected hydraulically to a fixed displacement motor 70 in a known manner. The pump 68 is driven by shaft 40 whilst the motor 70 drives output shaft 72 with integral gear 74 which itself is meshed with gear 76 which, in turn, is meshed with gear 78 being integral with planet carrier 54 which serves as a second epicyclic input. The variable displacement pump 68 may take many forms but is typically provided by an axial piston pump with a variable angle swashplate as in known continuously variable transmissions. The non-mechanical drive connection between pump 68 and motor 70 allows a continuous range of input to output speed ratios between input shaft 40 and output shaft 72 including a zero ratio in which the output speed is zero. The hydrostatic power branch 16 described is similar to that currently available on agricultural tractors branded VALTRA (registered trade mark) including a continuously variable transmission (CVT).

Although a hydrostatic drive connection is provided between shafts 40 and 72 it should be understood that other non-mechanical drive connections may be used instead such as those including an electric generator and an electric motor for example.

Together, the forward reverse transmission module 12, epicyclic module 14 and hydrostatic power branch 16 provide a, potentially standalone, CVT module having two output shafts 64, 66.

In the example shown in Figure 1, a third output is taken from gear 76 in the gear train 74, 76 coupling the hydrostatic power branch output 72 and planet carrier 54. Third output shaft 80 is integral with gear 76. Torque transferred by third output shaft 80 bypasses epicyclic module 14 and the rotational speed is dependant solely on the engine speed and gear ratio conveyed by hydrostatic branch 16. In this example the three outputs provided by shafts 64, 66, 80 serve to power the DSG module 18. However, it should be understood that the CVT having the three outputs described could be employed in other applications.

Turning to the DSG module 18 torque is taken from one of shafts 64, 66, 80 via respective gear trains described below. In a first torque transfer path gear 82 is keyed to shaft 80 and meshed with gear 84 which is, in turn, meshed with gear 86 forming a gear train. Gear 86 idles on first synchromesh shaft 88 which itself is hollow and disposed coaxially with output shaft 90 coupled to differential gear 24. Furthermore, gear 86 is integral with an input side of first clutch C1.

Closure of clutch C1 renders gear 86 integral with first synchromesh shaft 88 which, in turn, is integral with driven synchromesh gear 92 which forms part of first synchromesh unit 94.

First synchromesh unit 94 includes a coupling arrangement (not shown) which renders the driven synchromesh gear 92 with first synchromesh gear S1 or second synchromesh gear S2. Synchromesh arrangements are well known in the field of transmissions and the basic principle will not be described herein.

When first synchromesh gear S1 is engaged torque is transferred from first synchromesh shaft 88 to output shaft 90 via gears S1, 96, shaft 98 and gear train 100,102. Alternatively, when second synchromesh gear S2 is engaged torque is transferred from first synchromesh shaft 88 to output shaft 90 because second synchromesh gear S2 is integral with the latter.

In a second torque transfer path first epicyclic output shaft 64 is rendered integral with shaft 104 by closure of clutch C2. Meshed gears 106, 108 provide a drive connection between shaft 104 and second synchromesh shaft 110. Second synchromesh unit 112, similar to first synchromesh unit 94, includes a driven synchromesh gear 114 integral with second synchromesh shaft 110. In a similar manner to that described before, couplers (not shown) render the driven synchromesh gear 114 integral with either third synchromesh gear S3 or fourth synchromesh gear S4. By selective operation of second synchromesh unit 112, second synchromesh shaft 110 can be drivingly connected to output shaft 90 either directly (via gear S3) or indirectly (via gear S4,116, shaft 98 and gears 100,102).

In a third torque transfer path second epicyclic output shaft 66 is coupled to input side of third clutch C3 via a pair of gears 118 and 120. Closure of clutch C3 provides a drive path between second epicyclic output 66 and first synchromesh shaft 88. The torque transfer sub-paths (to be described below) provided by first synchromesh unit 94 complete the torque transfer path to the output shaft 90 and thus differential gear 24.

The clutches involved, that is forward clutch 30, reverse clutch 48 and first, second, third clutch C1, C2, C3 are of the wet multi-disc type and are each hydraulically actuated to allow electro-hydraulic control from an electronic control unit (not shown). However it will be understood that other types of clutches can instead be utilised.

From reading the above description it will be become apparent that the transmission 10 provides three main torque transfer paths between the engine 20 and differential gear 24. In a first torque transfer path power is conveyed via the hydrostatic power branch 16, first clutch C1 and first synchromesh unit 94, thereby providing a hydrostatic drive path including an in-line non-mechanical drive connection. In a second torque transfer path power is conveyed via the power split arrangement of the epicyclic unit 14 and power branch 16, second clutch C2 and second synchromesh unit 112. In a third torque transfer path power is transmitted via the power split arrangement 14, 16, third clutch C3 and first synchromesh unit 94.

For each of the aforementioned torque transfer paths two torque transfer sub-paths are available and selectable by the associated synchromesh units 94, 112. This provides *five* practical paths to transmit torque from the engine 20 to differential unit 24. It should be appreciated that a sixth path via clutches C1 and S2 is possible but not preferred.

Also provided is a four-wheel drive clutch 122, the input side of which is driven by a pair of gears 124, 126 driven by output shaft 90. It should be understood that four-wheel drive clutch 122 permits selective engagement of a four-wheel drive mode in which the front wheels of the vehicle are also provided with power for additional traction.

### Operation

### Transmission Stages

In the following passages the various operational modes will be described with reference to the forward direction of travel. A separate description of the reverse mode will be given thereafter.

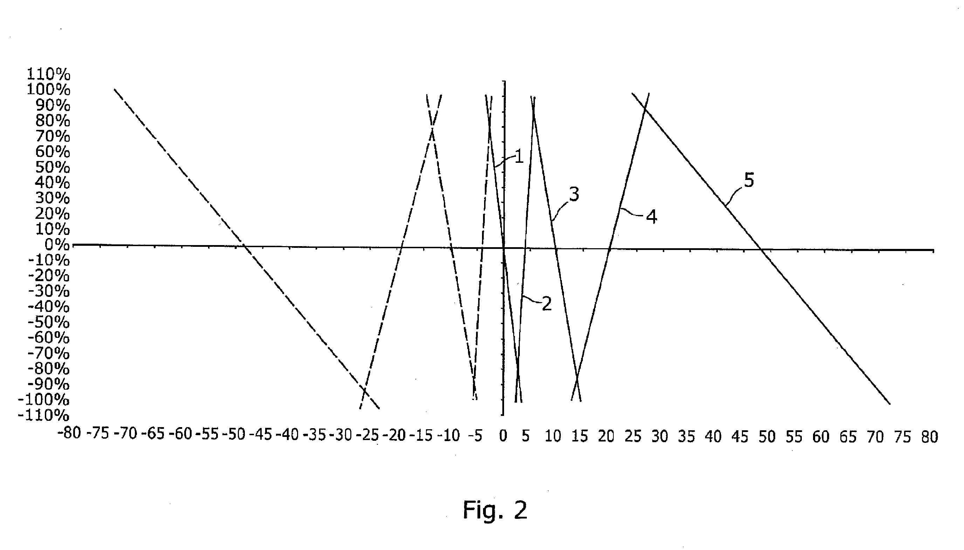

In a first transmission stage, or hydrostatic mode, neither the forward nor reverse clutches 30, 48 need be closed to deliver torque from the engine 20 to the differential gear 24. First clutch C1 is closed and first synchromesh gear S1 is engaged. The forward speed of the vehicle is controlled therefore by the engine output speed at driveshaft 22 and the variable ratio provided by hydrostatic power branch 16. Line 1 plotted on Figure 2 shows the correlation of forward speed (horizontal axis) of the vehicle at a constant engine speed in the first transmission stage with varying angles (vertical axis) of the swashplate in the pump 68. It can be seen that this hydrostatic mode can deliver a standstill (zero speed) as is available in some infinitely variable transmissions. Assuming a steady engine speed, a decrease in the swashplate angle from 0% results in stepless change in forward speed ratio. At these low speed ratios in the hydrostatic mode maximum drawbar force is available due to the torque transfer path bypassing the mechanical gearings of the epicyclic module 14 and instead passing via the mechanical drive connection 74, 76, 82, 84, 86.

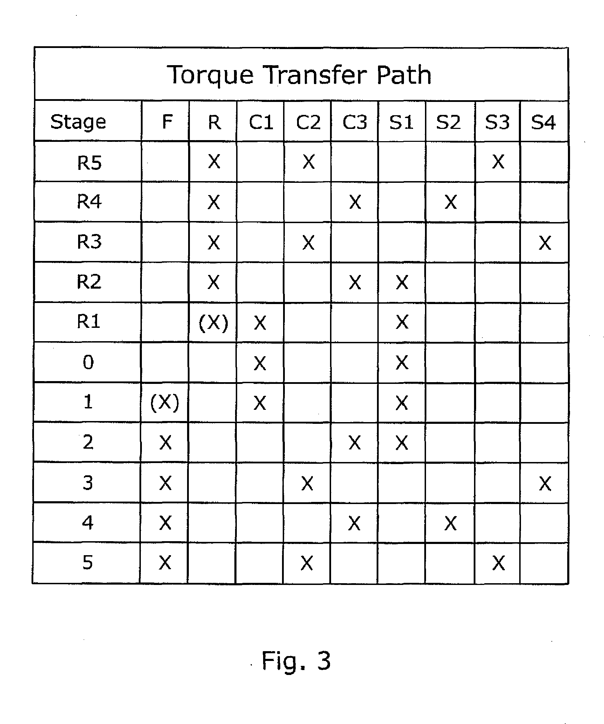

When in transmission Stage 0 or 1 (see Figure 3), both the forward and reverse clutches 30, 48 may be open due to the permanent drive connection to the hydrostatic branch 16 via gear train 32, 34, 36. Second and third clutches C2 and C3 are open which allows the forward clutch 30 to be closed under low load in preparation for a shift to transmission Stage 2.

Line 2 on Figure 2 is representative of transmission Stage 2 in which torque is transferred via third clutch C3 and first synchromesh gear S1. When increasing the forward speed ratio by reducing the swashplate angle (as described above in relation to the hydrostatic mode) the input and output sides of third clutch C3 become equal at a given angle which corresponds to the intersection of lines 1 and 2 in Figure 2. At this point the transmission can change from Stage 1 to Stage 2 by simultaneously opening first clutch C1 and closing third clutch C3. Provided the input and output sides of third clutch C3 are equalised there will be no noticeable jump in transmission ratio thereby providing continuous traction and improved comfort for the driver.

In transmission Stage 2 torque is transferred from the engine 20 to the differential 24 via the power split arrangement of epicyclic module 14 and power branch 16, third clutch C3 and first synchromesh gear S1. At constant engine revs, the drive speed is further increased by increasing the swashplate angle as illustrated by line 2 in Figure 2. During acceleration second synchromesh unit 112, under no load at this stage, engages fourth synchromesh gear S4 in anticipation of the next change in transmission stage. It should be understood that the engagement of fourth synchromesh gear S4 can be executed earlier instead.

At (or near) maximum swashplate angle in transmission Stage 2, the input side and output side of second clutch C2 become equalised in terms of rotational speed. This point is represented by the intersection of lines 2 and 3 on Figure 2 and represents the point during acceleration at which the transmission can switch from Stage 2 to Stage 3 in a seamless manner. At this point third clutch C3 is opened at the same time as second clutch C2 is closed. Torque is then transferred from the engine 20 to the differential gear 24 via clutch C2 and fourth synchromesh gear S4.

Further acceleration is enabled by a decrease in swashplate angle from maximum to minimum as represented by line 3 in Figure 2. During acceleration in transmission Stage 3 the first synchromesh unit 94, under no load at this stage, engages second synchromesh gear S2 in preparation of the anticipated change in transmission stage.

At (or near) minimum swashplate angle in transmission Stage 3 represented by the crossover of lines 3 and 4 in Figure 2, the input and output sides of third clutch C3 become equalised. At this point, assuming further acceleration is required, clutch C3 is closed at the same time as clutch C2 is opened thereby switching the transfer of torque back to the first synchromesh unit 94.

An increase in transmission ratio in transmission Stage 4 is enabled by an increase in the swashplate angle from minimum to maximum as represented by line 4 in Figure 2. During this acceleration stage second synchromesh unit 112 engages third synchromesh gear S3 in preparation in the anticipated up-shift in transmission stage.

At (or near) maximum pump angle in transmission Stage 4, the input and output sides of the second clutch C2 equalise in terms of speed. At this point, represented by the crossover of lines 4 and 5 in Figure 2 an up-shift in transmission stage is executed by simultaneously closing second clutch C2 and opening third clutch C3. This provides the highest transmission stage (Stage 5) in which further acceleration up to the maximum available ratio is carried out by a decrease in swashplate angle as represented by line 5 in Figure 2.

It should be understood that Figure 2 represents the input-to-output ratio of the overall transmission 10 and the horizontal axis can only represent forward speed at a steady engine speed. In normal operation the forward speed of the vehicle will be determined by appropriate adjustment of both the transmission ratio and the engine speed, typically to optimise the efficiency.

During deceleration, or a decrease in transmission ratio, the aforementioned sequence of clutch and synchromesh changes is reversed and the skilled person will understand that the unloaded synchromesh unit can engage the appropriate gear in anticipation of the next transmission stage change (down-shift).

In summary of the basic operation of the transmission shown in Figure 1, a power split transmission is provided in conjunction with a direct shift transmission to provide a continuous range of input-to-output speed ratios whilst also providing a purely hydrostatic mode which can be used to deliver maximum drawbar force at standstill. The DSG module 18 permits seamless changes in transmission stage so as not to interrupt the tractive force and place unnecessary loads on the transmission components as in known agricultural tractor transmission. In particular when under heavy loads such as during ploughing the transmission stage can be changed without stopping and/or interrupting the tractive force.

### Forward-reverse Module

Disposed at the front end of the transmission arrangement shown in Figure 1, forward-reverse module 12 permits all forward transmission ratios to also be available in reverse. The forward and reverse clutches 30, 48 are alternatively engageable (by associated hydraulic cylinders) to close the alternative torque transfer paths. In the forward range, forward clutch 30 is closed to provide a direct transmission of torque from driveshaft 22 to epicyclic input 38. In reverse mode, forward clutch 30 is opened and reverse clutch 48 is closed and torque is transferred via first gear set 32, 34, 36 and second gear set 42, 44. Due to one gear set including an odd number of gears and the second gear set comprising and even number of gears the direction of torque is reversed between driveshaft 22 and epicyclic first input 38.

Moreover, by providing a constant drive connection between the driveshaft 22 and the hydrostatic branch 16, forward and reverse drive ratios are available at low speeds when both the forward and reverse clutches 30, 48 are open. Furthermore, the placement of the forward reverse transmission module 12 upstream of the epicyclic module 14 allows the latter to be reversed for reverse gears. In other words, without the reversing of the first epicyclic input 38 the changing from hydrostatic transmission stage (Stage 1) in reverse mode to the (reverse) second transmission stage (Stage 2) would be non-trivial.

When operating in the hydrostatic mode, or first transmission stage, the forward and reverse clutches 30, 48 can be open. In these modes both forward and reverse at low drive ratio is available and can be sensed by an appropriate electronic control unit (ECU) in real time. In order to prepare for any required up-shift in transmission stage, the ECU may pre-empt such a change by selectively engaging forward clutch 30 or reverse clutch 48 depending on the sensed direction of movement, indicated by (X) in Figure 3. For example, in a situation in which the transmission is operating in the first transmission stage in the forward direction, the ECU may command closure of the forward clutch 30 to bring the input side of third clutch C3 up to speed before the commanded up-shift.

### Short Shifting

When under low load, determined by suitable pressure sensors in the hydrostatic power branch 16, the transmission 10 may operate in a 'short-shifting mode' wherein changes in transmission stage (as described above) are executed before the speed of the input and output sides of the incoming clutch are equalised. In other words, and with reference to Figure 2, the changes in transmission stage are commanded away from the intersection points of the lines shown.

In one example, an ECU, having determined that the transmission is under low load and a high acceleration is commanded, may execute the up-shifts in transmission stage when the swashplate angle is at +/- 50%. Advantageously, this avoids the need for the swashplate to reach maximum or minimum angle in order to up-shift.

The consequence is a transmission which behaves in a similar manner to known power-shift transmissions.

It should be understood that elements of the transmission illustrated in Figure 1 can be utilised in isolation, in combination with other transmission elements or arranged in a different order. For example, the direct shift transmission module 18 may instead be coupled to the front of another transmission module instead of direct connection to a differential gear as shown in Figure 1. Alternatively, the power split transmission provided by the forward-reverse module 12, epicyclic module 14, and hydrostatic power branch 16 may be replaced with a known power shift transmission having its outputs coupled to the direct shift transmission module 18.

In another arrangement not illustrated, the hydrostatic power branch 16 may be replaced with an electrostatic power branch comprising an electric generator and motor. Alternatively, the power branch may be replaced by a mechanical drive connection comprising one or more clutches as know in agricultural tractors in the VALTRA power shift range.

From reading the present disclosure, other modification will be apparent to persons skilled in the art. Such modifications may involve other features which are already known in the field of transmissions and component parts therefore and which may be used instead of or in addition to features already described herein.

## Claims

1. A continuously variable power-split transmission for transferring torque from a primary motor (20) to a differential gear (24), the transmission comprising an epicyclic module (14), a continuously variable drive connection (16) and a direct shift transmission module (18), the epicyclic module comprising a first input (38) drivingly couplable to the primary motor, a second input (54) and first and second outputs (64, 66), the continuously variable drive connection (16) being drivingly couplable between the primary motor (20) and the second input (54) of the epicyclic module (14), the first and second outputs (64, 66) being alternatively couplable to the differential gear (24) via respective torque transfer paths provided by the direct shift transmission module (18), each path including a clutch (C₂, C₃) and a synchromesh unit (94, 112) which allows selection of one of a plurality of torque transfer sub-paths, each clutch (C₂, C₃) comprising an input side and an output side, the transmission further comprising a controller to control switching between the torque transfer paths in which one of said clutches is opened and the other of said clutches is closed, **characterized in that** the transmission is operable in a first stage change mode in which said switching occurs only when the speed ratio of the input side to the output side of the clutch being closed is within a predetermined range, and a second stage change mode in which the speed ratio of the input side to the output side of the clutch being closed is outside of said predetermined range when said clutch is closed.

2. A transmission according to Claim 1, further comprising a load sensing means which determines the load placed upon the differential (24), wherein the transmission operates in the first stage change mode when said determined load is above a predetermined threshold, and wherein the transmission operates in the second stage change mode when said determined load is below said predetermined threshold.

3. A transmission according to Claim 2, wherein the continuously variable drive connection (16) is hydrostatic and includes a hydraulic pump (68) and a hydraulic motor (70), the load sensing means comprising a pressure sensor that measures the hydraulic pressure in the hydraulic pump (68).

4. A transmission according to any preceding claim, wherein, when in the second stage change mode, the input-to-output ratio of the continuously variable drive connection (16) is limited within a predetermined range.

5. A transmission according to any preceding claim, comprising first, second and third torque transfer paths between the primary motor (20) and the differential gear (24), the first torque transfer path including the continuously variable drive connection (16) and bypassing the epicyclic module (14), the second and third torque transfer paths each including one of the first and second epicyclic outputs (64, 66), each of the torque transfer paths including a respective in-line clutch (C₁, C₂, C₃) for closing the respective path, the first and third torque transfer paths sharing an input of one (94) of said synchromesh units.

6. A transmission according to Claim 5, wherein the transmission is operable in a mechanically discontinuous mode in which torque is transferred via the first torque transfer path, and first and second mechanical modes in which torque is transferred via the second and third torque transfer paths respectively, the transmission further comprising a forward-reverse transmission module (12) couplable between the primary motor (20) and the first epicyclic input (38) and serving to selectively reverse the torque direction conveyed to the first epicyclic input, wherein the forward-reverse transmission module (12) conveys torque from the primary motor (20) to an input of the continuously variable drive connection (16) with a constant direction.

## Patentansprüche

1. Stufenlos verstellbares leistungsverzweigtes Getriebe zur Übertragung eines Moments von einem primären Motor (20) zu einem Kegelrad- oder Differenzialgetriebe (24), wobei das Getriebe ein Umlaufmodul (14), eine stufenlos veränderbare Antriebsverbindung (16) und ein Getriebemodul (18) für eine direkte Schaltung besitzt, wobei das Umlaufmodul einen ersten Eingang (38) besitzt, welcher antriebsmäßig mit dem primären Motor koppelbar ist, einen zweiten Eingang (54) besitzt und einen ersten und zweiten Ausgang (64, 66) besitzt, wobei die stufenlos veränderbare Antriebsverbindung (16) antriebsmäßig zwischen den Primärmotor (20) und den zweiten Eingang (54) des Umlaufmoduls (14) koppelbar ist, wobei der erste und zweite Ausgang (64, 66) alternativ mit dem Kegelrad- oder Differenzialgetriebe (24) über jeweilige Moment-Transferpfade koppelbar sind, die durch das Getriebemodul (18) mit direkter Schaltung bereitgestellt werden, wobei jeder Pfad eine Kupplung (C₂, C₃) und eine Synchronisiereinheit (94, 112) aufweist, die eine Selektion eines von mehreren Unterpfaden für eine Übertragung eines Moments ermöglichen, wobei jede Kupplung (C₂, C₃) eine Eingangsseite und eine Ausgangsseite aufweist und das Getriebe des Weiteren über eine Steuer- oder Regeleinheit zur Steuerung oder Regelung eines Schaltens zwischen den Moment-Transferpfaden, in welchen eine der Kupplungen geöffnet ist und die andere der Kupplungen geschlossen ist, verfügt, **dadurch gekennzeichnet, dass** das Getriebe betreibbar ist in einem ersten Stufenveränderungsmodus, in welchem das Schalten lediglich auftritt, wenn das Drehzahlverhältnis der Eingangsseite zu der Ausgangsseite der Kupplung, die geschlossen wird, in einem vorbestimmten Bereich ist, und einem zweiten Stufenwechselmodus, in welchem das Drehzahlverhältnis der Eingangsseite zu der Ausgangsseite der Kupplung, welche geschlossen wird, außerhalb des vorbestimmten Bereichs ist, wenn die Kupplung geschlossen wird.

2. Getriebe nach Anspruch 1, wobei des Weiteren ein Sensormittel für eine Last vorhanden ist, welches die Last bestimmt, die auf das Kegelrad- oder Differenzialgetriebe (24) aufgebracht wird, wobei das Getriebe in dem ersten Stufenwechselmodus arbeitet, wenn die ermittelte Last oberhalb eines vorbestimmten Schwellwerts ist und wobei das Getriebe in dem zweiten Stufenwechselmodus arbeitet, wenn die ermittelte Last unterhalb des vorbestimmten Schwellwerts ist.

3. Getriebe nach Anspruch 2, wobei die stufenlos veränderbare Antriebsverbindung (16) hydrostatisch ausgebildet ist und eine hydraulische Pumpe (68) und einen hydraulischen Motor (70) aufweist, wobei das Sensormittel für eine Last einen Drucksensor aufweist, der den hydraulischen Druck in der hydraulischen Pumpe (68) misst.

4. Getriebe nach einem der vorhergehenden Ansprüche, wobei in dem zweiten Stufenwechselmodus das Eingangs-Ausgangs-Verhältnis der stufenlos veränderbaren Antriebsverbindung (16) auf einen vorbestimmten Bereich begrenzt ist.

5. Getriebe nach einem der vorhergehenden Ansprüche mit einem ersten, zweiten und dritten Moment-Übertragungspfad zwischen dem primären Motor (20) und dem Kegelrad- oder Differenzialgetriebe (24), wobei der erste Moment-Übertragungspfad die stufenlos veränderbare Antriebsverbindung (16) beinhaltet und das Umlaufmodul (14) umgeht und der zweite und dritte Moment-Übertragungspfad jeweils eine der ersten und zweiten Umlaufausgänge (64, 66) aufweisen, wobei jeder der Übertragungspfade für das Moment eine jeweilige integrierte Kupplung (C₁, C₂, C₃) aufweist zum Schließen des zugordneten Pfads und wobei sich der erste und dritte Moment-Übertragungspfad einen Eingang von einer (94) der Synchronisiereinheiten teilen.

6. Getriebe nach Anspruch 5, wobei das Getriebe in einem mechanisch diskontinuierlichen Modus betreibbar ist, in welchem Moment über den ersten Moment-Übertragungspfad übertragen wird, sowie in einem ersten und zweiten mechanischen Modus betreibbar ist, in welchem Moment über den zweiten und dritten Moment-Übertragungspfad übertragen wird, wobei das Getriebe darüber hinaus ein Vorwärts-Rückwärts-Getriebemodul (12) aufweist, welches zwischen den primären Motor (20) und den ersten Umlaufeingang (38) koppelbar ist und dazu dient, selektiv die Momentenrichtung, die zu dem ersten Umlaufeingang übertragen wird, umzukehren, wobei das Vorwärts-Rückwärts-Getriebemodul (12) Moment mit einer konstanten Richtung von dem primären Motor (20) zu einem Eingang der stufenlos veränderbaren Antriebsverbindung (16) liefert.

## Revendications

1. Transmission à répartition de couple à variation continue destinée à transférer un couple depuis un moteur principal (20) vers un boîtier différentiel (24), la transmission comprenant un module épicycloïdal (14), une liaison d'entraînement à variation continue (16) et un module de transmission à changement direct (18), le module épicycloïdal comprenant une première entrée (38) pouvant être couplée au moteur principal de manière à assurer l'entraînement, une seconde entrée (54) et des première et seconde sorties (64, 66), la liaison d'entraînement à variation continue (16) pouvant être couplée de manière à assurer l'entraînement entre le moteur principal (20) et la seconde entrée (54) du module épicycloïdal (14), les première et secondes sorties (64, 66) pouvant, en variante, être couplées au boîtier différentiel (24) par l'intermédiaire de trajets de transfert de couple respectifs, assurés par le module de transmission à changement direct (18), chaque trajet comportant un embrayage (C2, C3) et une unité de synchronisation (94, 112) qui permet la sélection de l'un d'une pluralité de trajets de transfert de couple secondaires, chaque embrayage (C2, C3) comprenant un côté d'entrée et un côté de sortie, la transmission comprenant en outre une unité de commande destinée à commander la commutation entre les trajets de transfert de couple sur lesquels l'un desdits embrayages est ouvert et l'autre desdits embrayages est fermé, **caractérisé en ce que** la transmission peut être commandée dans un premier mode de changement de vitesse dans lequel ladite commutation se produit uniquement lorsque le rapport de vitesse du côté d'entrée sur le côté de sortie de l'embrayage fermé est compris dans une plage prédéterminée, et un second mode de changement de vitesse dans lequel le rapport de vitesse du côté entrée sur le côté de sortie de l'embrayage fermé est à l'extérieur de ladite plage prédéterminée lorsque ledit embrayage est fermé.

2. Transmission selon la revendication 1, comprenant en outre un moyen de détection de charge qui détermine la charge placée sur le différentiel (24), dans laquelle la transmission fonctionne dans le premier mode de changement de vitesse lorsque ladite charge déterminée est supérieure au seuil prédéterminé, et dans laquelle la transmission fonctionne dans le second mode de changement de vitesse lorsque ladite charge déterminée est inférieure audit seuil prédéterminé.

3. Transmission selon la revendication 2, dans laquelle la liaison d'entraînement à variation continue (16) est hydrostatique et comporte une pompe hydraulique (68) et un moteur hydraulique (70), le moyen de détection de charge comprenant un capteur de pression qui mesure la pression hydraulique dans la pompe hydraulique (68).

4. Transmission selon l'une quelconque des revendications précédentes dans laquelle, lorsque celle-ci est dans le second mode de changement de vitesse, le rapport entrée/sortie de la liaison d'entraînement à variation continue (16) est limité à une plage prédéterminée.

5. Transmission selon l'une quelconque des revendications précédentes, comprenant des premier, deuxième et troisième trajets de transfert de couple entre le moteur principal (20) et le boîtier différentiel (24) le premier trajet de transfert de couple comportant la liaison d'entraînement à variation continue (16) et passant au-delà du module épicycloïdal (14), les deuxième et troisième trajets de transfert de couple comportant chacun l'une des première et seconde sorties épicycloïdales (64, 66), chacun des trajets de transfert de couple comportant un embrayage en ligne (C1, C2, C3) respectif afin de fermer le trajet respectif, les premier et troisième trajets de transfert de couple partageant une entrée de l'une (94) desdites unités de synchronisation.

6. Transmission selon la revendication 5, dans laquelle la transmission peut être commandée selon un mode mécaniquement discontinu dans lequel le couple est transféré par l'intermédiaire du premier trajet de transfert de couple, et des premier et second modes mécaniques dans lesquels le couple est transféré respectivement par l'intermédiaire des deuxième et troisième trajets de transfert de couple, la transmission comprenant en outre un module de transmission normale-inverse (12) pouvant être couplé entre le moteur principal (20) et la première entrée épicycloïdale (38) et servant à inverser de manière sélective le sens du couple transféré vers la première entrée épicycloïdale, dans laquelle le module de transmission avant-arrière (12) transfère le couple du moteur principal (20) vers une entrée de la liaison d'entraînement à variation continue (16) dans un sens constant.
